(19) **Europäisches Patentamt / European Patent Office / Office européen des brevets**

(11) **EP 4 334 530 B1**

(12) **EUROPEAN PATENT SPECIFICATION**

(45) Date of publication and mention of the grant of the patent:
**23.04.2025 Bulletin 2025/17**

(21) Application number: **22728454.4**

(22) Date of filing: **09.05.2022**

(51) International Patent Classification (IPC):
**E01C 13/08** (2006.01)  **B01J 2/00** (2006.01)
**B29B 9/00** (2006.01)

(52) Cooperative Patent Classification (CPC):
**E01C 13/08**

(86) International application number:
**PCT/EP2022/062502**

(87) International publication number:
**WO 2022/234142 (10.11.2022 Gazette 2022/45)**

(54) **INFILL PARTICLE FOR ARTIFICIAL TURF, METHOD OF PRODUCING SUCH INFILL PARTICLE AND USE OF SUCH INFILL PARTICLE**

FÜLLUNGSPARTIKEL FÜR KUNSTRASEN, VERFAHREN ZUR HERSTELLUNG SOLCH EINES FÜLLUNGSPARTIKELS UND VERWENDUNG SOLCH EINES FÜLLUNGSPARTIKELS

PARTICULE DE REMPLISSAGE POUR GAZON ARTIFICIEL, PROCÉDÉ DE PRODUCTION D'UNE TELLE PARTICULE DE REMPLISSAGE ET UTILISATION DE LADITE PARTICULE DE REMPLISSAGE

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **07.05.2021 GB 202106534**
**13.08.2021 GB 202111672**

(43) Date of publication of application:
**13.03.2024 Bulletin 2024/11**

(73) Proprietor: **GOE-IP AS**
**4046 Hafrsfjord (NO)**

(72) Inventors:
• **RAVNÅS, Asle**
**4046 Hafrsfjord (NO)**
• **RAVNÅS, Mette**
**4046 Hafrsfjord (NO)**

(74) Representative: **Dehns**
**10 Old Bailey**
**London EC4M 7NG (GB)**

(56) References cited:
**WO-A1-2018/039554    WO-A1-2020/120799**
**IT-A1- MI20 131 235    KR-A- 20170 105 233**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates generally to an infill particle for artificial turf. More particularly, the invention relates to an infill particle for artificial turf wherein said particle is made from organic material. The invention also relates to a method of producing the infill particle of the invention and artificial turf systems comprising these particles.

IT MI20131235 A1 relates to an artificial turf structure and a method of making artificial turf.

KR 20170105233 A1 relates to an artificial turf filler having antibacterial function.

WO 2018/039554 A1 relates to a treated walnut shell infill for artificial turf.

WO 2020/120799 A1 relates to a turf infill comprising a mixture of cork particles and rubber particles.

Artificial turf has become a significant alternative to natural grass in several types of environments. Football uses artificial turf to a large extent both indoors and outdoors. While artificial turf systems can vary in terms of their design and manufacture, they generally all share common components. The artificial turf fibre (or turf pile or artificial grass) itself is usually made from polyethylene (PE) with a primary backing material of polypropylene (PP) that provides the structure and spacing that the artificial turf fibre is woven into. A secondary backing of polyurethane (PU) may be applied and allowed to set in order to bind the pile to the backing. The backing or backings form the "turf carpet".

There are several different types of artificial turf system, including hybrid, first generation (1G), second generation (2G), and third generation (3G) turf systems. Hybrid turf, or reinforced natural grass, is a turf created by combining natural grass with synthetic reinforcing fibers. First generation artificial turf systems comprise short artificial turf fibres. First generation artificial turf systems have largely been superseded by second generation and third generation artificial turf systems. Second generation artificial turf systems have longer fibres (e.g. 13-24 mm in height) and a sand infill.

Third generation systems typically include even longer fibres (e.g. 30-60 mm in height), and include two types of infill, namely a "stabilising infill" (which is typically sand) and a "performance infill". Typically, the stabilising infill is placed as a lower layer between the artificial turf fibres, while the performance infill is placed on top of the stabilising infill as an upper layer between the artificial turf fibres. The stabilising infill functions to keep the artificial turf fibres vertical during use, while the performance infill functions to mimic the feel of a natural grass bed, for example by providing the correct level of impact resistance, rotational resistance and bounce. Currently, the performance infill used in most artificial turf systems is styrene-butadiene rubber (SBR) - also known as crumb rubber - which is derived from used car tyres. Optionally, a shock pad can be provided underneath the turf carpet to provide further support.

In a typical artificial turf pitch of 106 x 71 meters with SBR as the performance infill, 49% of the total weight consists of the stabilising infill (sand) and 44% of the total weight consists of the performance infill (SBR). The remainder is the plastic-based turf itself, i.e. the turf carpet and artificial turf fibres.

The environmental impacts of artificial turf systems are thus often dominated by the infill material. The performance infill market is dominated by SBR with around 83% of installations incorporating this material. Whilst sand is also a large component of the 3G turf system as the stabilising infill, it requires significantly less energy and processing to recycle compared to SBR. It is estimated that 10% of infill escapes from artificial turf systems every year, i.e. is scattered into the wider environment.

SBR granulate escape has been shown to pose a significant environmental problem, since SBR is resistant to biodegradation and is environmentally toxic. Therefore, there is a need to provide an infill that has a less negative environmental footprint, which will biodegrade after escape from an artificial turf and is not environmentally toxic.

Cork granules are one of the few known natural infill alternatives. However, cork granules are not ideal for all applications, since they are expensive and will tend to deteriorate on artificial turf over time at a faster rate than rubber, so the infill will need topping up more regularly over the lifetime of the artificial turf.

The present invention provides an infill for artificial turf that meets the aforementioned needs. This infill of the invention is demonstrated to have achieved FIFA Quality PRO and FIFA Quality certification (by satisfying the performance requirements outlined in EN 15330-1: 2013), based on tests performed at an accredited FIFA laboratory - Sports Labs Ltd (see Example 3).

In particular, the invention provides an infill particle for artificial turf, wherein said particle has a salt content of at least 5 %, preferably at least 10%, by weight, has a volume of up to about 512 mm$^3$ and is made of wood.

The inventors have found surprisingly that wood has technical properties comparable to those of SBR granules. Hence, the infill particles of the invention constitute a product that can perform the function of SBR without the associated environmental harm resulting from infill escape.

The particles are impregnated with a high content of salt. The level of salt in the infill particles of the invention contributes to the particle behaving stably and not breaking down too soon (being resistant to decomposition and decay). Without wishing to be bound by theory, this effect appears to be caused by the ability of the salt to repel microorganisms and fungi, thus causing the infill particles to be resistant to biodegradation, and the contribution of the salt to resistance of the particle to UV radiation. The salt also makes the particles more dense and this gives better properties as infill (e.g. for sports pitches) than wood that is not impregnated with a high concentration of salt. Even at the high concentrations used, the salt is not environmentally harmful, neither toxic to humans or other animals which may come into contact with the infill nor harmful to the wider environment.

The infill is demonstrated to be stable on artificial turf for at least 5 years and is predicted to be stable for 10 years. The lifetime of an artificial turf (i.e. the turf carpet comprising artificial turf fibres) is approximately 10 years and so, unlike cork and other known organic infills, there is a reduced need to replace or top up the infill of the invention over the lifetime of the artificial turf.

Throughout the present specification, where the terms "comprising", "comprise" and "comprises" are used, the terms "consisting of", "consist of" and "consists of" are also alternatively contemplated.

By "infill" it is meant any solid particle that is suitable for use on an artificial turf. Particles which are suitable for use on an artificial turf may be particles which, as part of the turf system, mimic the properties of natural grass or a natural grass bed. The properties mimicked may be ball rebound, ball roll, shock absorption, vertical deformation, rotational resistance of the foot, and/or water permeability.

Hence, in some embodiments, the infill of the invention is an infill for artificial turf (e.g. an artificial football turf). In preferred embodiments, the infill of the invention is for (or suitable for, or suitable for use on) artificial turf (e.g. artificial football turf) having artificial turf fibres (preferably monofilament fibres, fibrillated fibres, monofilament fibres with a stem, or a combination thereof, more preferably monofilament fibres) of about 25-70 mm in height (preferably about 30-50 mm in height, more preferably about 40 mm in height). More preferably, the infill of the invention is for (or suitable for, or suitable for use on) artificial turf (or artificial football turf) having artificial turf fibres which are monofilament turf fibres and are about 40 mm in height. In preferred embodiments, the infill of the invention is for (or suitable for, or suitable for use on) a third generation (3G) artificial turf. In other words, in preferred embodiments, the infill of the invention is a third generation (3G) artificial turf infill.

In preferred embodiments, the infill of the invention is a performance infill, preferably a performance infill for (or suitable for, or suitable for use on) an artificial turf, more preferably a performance infill for (or suitable for, or suitable for use on) a third generation artificial turf.

Infill particles (or infill) of the invention can be referred to simply as "particles".

The infill particle of the invention comprises a substrate (also referred to as a base material), which is impregnated with salt. In the invention, the substrate is preferably wood. However, more broadly, it is also contemplated herein that the substrate comprises (or is formed form or consists of or consists essentially of) other cellulosic and/or hemicellulosic material. Hence, where wood is discussed herein, it should be appreciated that other cellulosic and/or hemicellulosic material is contemplated (including lignocellulosic material). Examples of such other non-wood substrates include nut shells, olive stones, cork, coconut, walnut shell, and/or corn cob.

Hence, the invention also provides an infill particle for artificial turf, wherein said particle has a salt content of at least 5 %, preferably at least 10%, by weight, has a volume of up to about 512 mm$^3$ and is made of cellulosic and/or hemicellulosic material.

The wood of the infill particle may be whole wood or raw wood. Preferably, the wood is not reconstituted or engineered wood. For example, preferably the wood is not formed from compressed or blended sawdust.

Preferably the infill particle does not contain non-biodegradable material.

Preferably the infill particle (or the substrate) does not contain thermoplastic material. Composite infill particles in the art may comprise a thermoplastic material, the purpose of which is to bind the substituents of the particle together. However, thermoplastic material is disadvantageous to use in infill particles since it is potentially damaging to the environment (thermoplastic material used in infill particles may be synthetic and non-biodegradable). In contrast, the method of production of the infill particles of the invention enables salting without the need to break apart the natural structure of cellulosic or hemicellulosic material and then recombine the fibres. This means that there is no need for the use of a thermoplastic material in the particles of the invention, which is advantageous.

Most preferably, the substrate of the infill particle consists (or consists essentially of) wood (or cellulosic and/or hemicellulosic) material.

The infill particles of the invention are engineered, manufactured or man-made, preferably manufactured.

The salt is an inorganic salt, typically comprising, consisting or consisting essentially of a chloride salt. In preferred embodiments, the salt is sodium chloride, magnesium chloride, calcium chloride, potassium chloride, sodium sulfate, magnesium sulfate, calcium sulfate, potassium sulfate or a mixture thereof. In more preferred embodiments, the salt is sodium chloride, magnesium chloride, calcium chloride, potassium chloride or a mixture thereof. In more preferred embodiments, the salt consists or consists essentially of sodium chloride, i.e. the inorganic salt component is at least 95% NaCl, preferably at least 98% NaCl.

In some embodiments, the salt content (or salt concentration) of the infill particle is at least (or up to) about 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50% by weight. Preferably, the salt content (or salt concentration) of the infill particle is at least about 7%, or at least about 10%, or at least about 15%, or at least about 20% by weight, or at least about 30%, or at least about 40% by weight. Preferably, the salt content of the infill particle is between about 10-55%, e.g. 10-40%, 20- 50% or 30-50% by weight, in some preferred embodiments between about 20-35% by weight. For the avoidance of doubt, the term "% by weight" means the % (percentage) of the total weight of the infill particle which is made up of salt. Instead of the term "% by weight", the term "% weight", "% by mass" or "% mass" could equally be used.

The salt % by weight is calculated based on a dry particle, e.g. a particle that has been in dry ambient conditions for at least 1 week. Dry ambient conditions may be those found inside a building at normal room temperature (e.g. 20 degrees Celsius) and under normal conditions of humidity, e.g. between 30 and 50% humidity, such as 40% humidity.

In some embodiments, the salt content (or salt concentration) of the infill particle is at least (or up to) about 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49 or 50% by volume. Preferably, the salt content (or salt concentration) of the infill particle is at least about 5%, or at least about 10% by volume. Preferably, the salt content is between about 5-15% by volume. For the avoidance of doubt, the term "% by volume" means the % of the total volume of the infill particle which is made up of salt. Instead of the term "% by volume", the term "% volume" could be used.

The salt % by volume is calculated based on a dry particle, e.g. a particle that has been in dry ambient conditions for at least 1 week.

The size of the infill particle can be conveniently defined by the volume of said particle. The volume of the particle may be up to about 512, 500, 400, 343, 300, 216, 200, 175, 125, 120, 115, 110, 105, 100, 95, 90, 85, 80, 75, 70, 65, 60, 55, 50, 45, 40, 35, 30, 25, 20, 15, or 10 mm$^3$. The volume of the infill particle may be at least about 0.001, 0.008, 0.01, 0.1, 1, 2, 3, 4 or 5 mm$^3$. Preferably, the volume of the infill particle is between about 0.008 mm$^3$ and about 64, or between about 0.008 mm$^3$ and about 125 mm$^3$. More preferably, the volume of the infill particle is between about 0.1 mm$^3$ and about 125 mm$^3$. Most preferably the volume of the infill particle is between about 0.5 mm$^3$ and about 64 mm$^3$, e.g. between about 1mm$^3$ and about 10 or 20 mm$^3$, particularly around 8 mm$^3$. The volume should be understood as the size of the particle measured or calculated from its dimensions, the volume of a particle is not reduced just because it may contain pores (i.e. voids). Thus a preferred particle which is a cube of 2mm in each dimension has a volume of 8mm$^3$.

Preferably, the infill particle has a volume of between about 0.001 mm$^3$ and about 512 mm$^3$, more preferably between about 0.008 mm$^3$ and about 125 mm$^3$, more preferably between about 1 mm$^3$ and about 64 mm$^3$, more preferably between about 1 mm$^3$ and about 27 mm$^3$.

Most preferably, the infill particle is a cube having dimensions of 2x 2x 2 mm and a volume of about 8 mm$^3$. As demonstrated herein, particles having dimensions of 2x 2x 2 mm are particularly suitable for use as an infill for artificial turf. It is demonstrated herein that such particles exhibit long-term (at least 5 years, possibly 10 or more years) resistance to degradation while on artificial turf, yet advantageously they degrade quickly when in soil. Such particles are also demonstrated herein to be resistant to freezing down to -18°C. The 2x 2x 2mm size itself is also particularly appropriate for artificial turf, being particularly complementary to the size and spacing of the turf fibres usually seen on artificial turf carpets. The 2x 2x 2mm size of particle can also be efficiently manufactured. Particles which are cubes of 1x1x1 mm are also highly preferred and exhibit excellent performance as infill. Cubes with dimensions of 0.5-4x 0.5-4 x 0.5-4 mm are generally preferred as are cuboids of the same dimensions.

As demonstrated herein, rounding of the corners of the particles reduces rolling and slipping of the boot on the turf; thus, salted particles with rounded corners are particularly advantageous as an infill for artificial turf. As demonstrated herein, such rounding may be achieved simply by the wearing of the particles during use on the artificial turf; hence, rounding does not have to be done during manufacture of the particles, thus reducing production costs. Nevertheless, rounding of the corners of the cubes/cuboids can be done during manufacturing of the particles if desired, as described elsewhere herein.

The infill particle can be any shape, preferably any shape that is suitable for use on an artificial turf, more preferably any shape that is suitable for use on a third generation artificial turf. The infill particle may take the shape of any polyhedron. In preferred embodiments, the infill particle has the shape (or approximate shape) of a cube, cuboid, sphere, ellipsoid, spheroid, ovoid, or pyramid, e.g. a tetrahedron or a square pyramid. In preferred embodiments, the infill particle has the shape (or approximate shape) of a cuboid or cube, more preferably a cube. Thus the particles are preferably (approximately) equal in their three dimensions. Preferably, no single dimension is more than 1.5 times the length of any other dimension.

In other embodiments, cuboid particles may be preferred, such as elongate or flattened cuboids, for example particles having dimensions of 1x 2x 2mm, may be preferred. Other preferred shapes include 1x1x4mm, 1x1x2mm, 2x4x4mm and 2x2x4mm. Such particles may make the artificial turf less slippery (for example by providing more rotational resistance) as compared with cubic infill particles.

It may be preferred for the cuboid particles to be flattened rather than elongate in form, in other words, one dimension is smaller than the other two dimensions, which are the same or approximately the same (rather than one dimension being larger than the other two dimensions, as is the case with an elongate cuboid/particle).

In other preferred embodiments the particles are spheres or spheroid. Preferred diameters are 0.5-4mm, preferably 1-2mm.

The particles are three dimensional and it is understood that for a three dimensional object, the aspect ratio is the ratio of the longest dimension to the shortest dimension. Cuboids are contemplated where two dimensions are the same and one is longer or shorter than the other two, or all three dimensions may be different. Thus the cuboid particles may define an aspect ratio of at least (or up to) 1:1, 2:1, 3:1, 4:1, 5:1, 6:1, 7:1, 8:1, 9:1, or 10:1. Preferably the aspect ratio is between 1:1 and 10:1, more preferably between 2:1 and 10:1, more preferably between 2:1 and 5:1.

In some embodiments, the infill particle has a width to thickness dimension in a range of about (0.5mm to 5mm) x(0.5mm to 5mm). In some embodiments, the infill particle has a cross section and/or length dimension of about 1mm to about 5mm.

In some embodiments, the infill particle length is between 1mm and 5mm, and/or the aspect ratio is between 3:1 and 7:1.

In some preferred embodiments, the infill particle of the invention has a smooth or polished surface. A "smooth or polished" surface in accordance with the invention is one that has been treated to reduce roughness and/or to soften the sharpness or angularity of edges and/or corners.

In some embodiments, the vertices (or corners) of the processed infill particle shape are rounded. Infill particles of the invention with rounded vertices (or corners) may be advantageous since the rounding improves the rotational resistance of the turf over which the infill is distributed. By rotational resistance it is meant the ability of the turf to resist the rotational movement of a sole (or foot or boot) when pressed down on the turf. Preferably the infill particle has the shape of a cube or cuboid with rounded corners.

In some embodiments, some of the outer pores of the infill particle of the invention are sealed, as in they do not provide open channels from the exterior of the particle into the particle. At least 10%, 20%, 30%, 50% or 70% of the pores which open on to the surface of the particle may preferably be sealed. The pores of the infill particle of the invention may be sealed by polishing the particles.

The water absorbency of the infill particle of the invention may be reduced compared to raw wood particles of the same dimensions. The water absorbency of the infill particle of the invention may be reduced by virtue of having a smooth or polished surface. Alternatively or in addition, the water absorbency of the infill particle of the invention may be reduced by virtue of having been impregnated with an oil or a preservative.

Nevertheless, it is preferred that the particles can absorb some water so they can behave in a spongey way and mimic the conditions of a traditional turf pitch in different weather, i.e. harder in dry weather and softer with rain.

The infill particles of the invention may (or may not) be impregnated with an oil or a preservative. The oil or preservative serves as a protective coating (e.g. a waterproof coating) of the infill particles, and functions to improve the retention of the salt inside the particle.

Thus, in preferred embodiments, the oil is a natural oil (i.e. plant derived) and the preservative is a natural preservative. In preferred embodiments, the oil is linseed oil (e.g. cold pressed linseed oil). Alternative oils include Tung oil, olive oil, rapeseed oil or sunflower oil.

In preferred embodiments, the infill particle does not comprise a coating. In preferred embodiments, the infill particle does not contain (or is not coated with) glycerol, xylitol or sorbitol, more preferably it does not contain any polyols. In some preferred embodiments, the infill particle does not contain potassium acetate, sodium formate, sodium acetate, urea, sodium chloride, and/or calcium chloride.

However, in some embodiments a glycerol (glycerine) coating may have been applied in addition to the salt, usually in a separate application step.

The salting process significantly increases the density/weight of the wood and this provides superior properties as compared to unsalted wood, in particular it enables the particles to meet the density requirements set by FIFA for infill. Thus, for example, the density of the dry particle is increased by 20-60%, preferably at least 30% through the addition of salt. Preferably dry particles have a density of 0.3 - 0.7g/ml, more preferably 0.4-0.7g/ml, in some embodiments 0.65-0.70g/ml.

In some embodiments, when the particles are packaged for sale or applied to the turf system or laid on a pitch, they have a moisture content of around 16-20% (this can still be considered a dry particle). The infill particle of the invention typically has a density higher than (or about the same as) pure water such that the infill particle tends to sink when in pure water; it is to be understood that the (dry) particles may float initially, due to the buoyancy of wood, but when placed in water (e.g. after 30 minutes), water is taken up and then the particles become more dense than water and sink. The salt content causes the wet particles to be denser than water, despite the fact that wood would naturally be buoyant in water.

Overall, the density of the particle is dependent on saturation and salinity, so it depends not only on the amount of salt added to the substrate particle but also on the ambient or environmental conditions, which will impact on how much moisture is present in (taken up by) the particle. In general the density will vary from 0.5g/ml to over 1.0g/ml (e.g. up to 1.1, 1.2 or 1.4 g/ml).

The wood of the particles may be natural or raw wood, e.g. as opposed to engineered wood products which may be formed from reconstituted chip or plies which may have a non-wood binder, such as a resin or glue.

The wood of the particles may be softwood or hardwood, hardwood being preferred.

Suitable softwood includes Araucaria, Cedar (Cedrus), Celery-top pine (Phyllocladus aspleniifolius), Cypress (e.g. Chamaecyparis, Cupressus, or Taxodium), Douglas-fir (Pseudotsuga menziesii), European yew (Taxus baccata), Fir (Abies), Hemlock (Tsuga), Huon pine, Macquarie pine (Lagarostrobos franklinii), Kauri (Agathis australis), Queensland kauri (Agathis robusta), Japanese nutmeg-yew (Torreya nucifera), Larch (Larix), Pine (Pinus), Red cedar (e.g. Juniperus virginiana or Thuja plicata), Coast redwood (Sequoia sempervirens), Rimu (Dacrydium cupressinum), Spruce (Picea), Sugi (Cryptomeria japonica), White cedar (e.g. Thuja occidentalis or Chamaecyparis thyoides), or Nootka cypress (Cupressus nootkatensis).

Suitable hardwood includes birch (Betula), Alder (Alnus), Ash (Fraxinus), Aspen (Populus), Australian red cedar (Toona ciliata), Boxelder (Acer negundo), Boxwood (Buxus sempervirens), Brazilian walnut (Ocotea porosa), Brazilwood (Caesalpinia echinata), Aesculus, Catalpa, Ceylon satinwood (Chloroxylon swietenia), Cherry (Prunus), Chestnut (Castanea), Coachwood (Ceratopetalum apetalum), Corkwood (Leitneria floridana), Populus, Dogwood (Cornus), Ebony (Diospyros), Elm (Ulmus), Eucalyptus, European crabapple (Malus sylvestris), European pear (Pyrus communis), Ironwood, Kingwood (Dalbergia cearensis), Lacewood, Mahogany (e.g. Swietenia, Khaya, Toona, Entandrophragma, Chukrasia, Cedrela, Guarea, Carapa, or Melia), Maple (Acer), Marblewood (Marmaroxylon racemosum), Oak (Quercus), Walnut (Juglans), or Willow (Salix).

In some preferred embodiments, the softwood is Spruce (Picea), more preferably Sitka spruce (Picea sitchensis).

In some particularly preferred embodiments, the hardwood is birch (Betula) e.g. an American birch, preferably gray birch (Betula populifolia), black birch (Betula nigra), paper birch (Betula papyrifera), sweet birch (Betula lenta), Virginia round-leaf birch (Betula uber) or yellow birch (Betula alleghaniensis). In some preferred embodiments, the birch is a European birch, preferably silver birch (Betula pendula) or most preferably downy birch (Betula pubescens).

Birch is preferred as the substrate of the infill particle of the invention due to its particularly advantageous properties, as demonstrated in the Examples. Birch is also particularly advantageous due to its homogeneous structure throughout the trunk, which allows the production of homogeneous particles. This is important since it provides consistency of physical properties between batches of infill particles. This homogeneity is in contrast to more heterogeneous wood such as southern yellow pine, which is harder and more compact towards the core of the tree but softer and less compact in the outer layers. Wood such as southern yellow pine is therefore not as ideal for making infill particles as other woods, especially birch, preferably European birch.

The birch wood used as the preferred substrate of the infill particles of the present invention also has enhanced properties, for example in terms of energy restitution (it provides greater "bounce back") than other woods, such as southern yellow pine.

Preferably, the plurality of infill particles of the present invention are homogeneous in size. For example, at least 70, 80 or 90% of the particles have a volume which is within 20%, preferably within 10%, e.g. 5% (plus or minus), of the mean volume.

The infill particle of the invention is resistant to biodegradation while on artificial turf. Biodegradation is the breakdown of organic matter by microorganisms, such as bacteria and fungi. In practice, almost all biological compounds and materials are subject to biodegradation processes. The significance, however, is in the rates of such processes, such as days, weeks, years or centuries. Since organic matter is particularly prone to biodegradation, the level of resistance of the organic infill to biodegradation while on artificial turf is important in determining the lifetime of the organic infill.

The infill particle of the invention is demonstrated herein to be stable on artificial turf for at least 5 years, and is expected to last for at least 10 years (in contrast, when the infill particle is placed in soil, it is fully biodegraded within 3 months). This is particularly advantageous, since it means that the infill particle of the invention is commercially useful as an infill for artificial turf.

The particles are preferably stable, e.g. able to retain their functional properties and structure, for at least 5 years when placed on artificial turf.

In order for the artificial turf system to be functional during cold weather, it is important that the infill (including the performance infill) does not freeze, otherwise the surface will not mimic the conditions of a normal grass bed. A frozen infill will not have the same advantageous properties as a non-frozen infill. Thus, it is desirable for any infill particle to be resistant to freezing down to low temperatures.

The infill particle of the invention is freeze resistant. Without wishing to be bound by theory, this may be due to the high salt content (or salt concentration) of the infill particle, and may additionally be due to the wood of the infill particle. The infill particle of the invention is preferably freeze resistant at, i.e. it is not frozen, down to -10, -15 or even -18 °C.

In certain events taking place on artificial turf, pyrotechnics and/or fireworks may be used (for example during breaks in play at sporting events). In order for this to be feasible, it is important that the artificial turf is fire resistant. Since the infill makes up a large portion of the artificial turf, it is important that the infill is fire resistant in these circumstances.

Therefore, in embodiments, the infill particle of the invention is fire resistant or non-flammable. In embodiments, the infill particle of the invention is substantially fire resistant or completely fire resistant. In embodiments, the infill particle of the invention is more fire resistant than a corresponding unsalted or unmodified version of said particle.

The infill particle of the invention is preferably less susceptible to degradation by UV radiation than untreated wood of the same dimensions.

The infill particles employed according to the present invention may comprise two or more shapes of infill particle. In preferred embodiments, the two or more shapes are selected from the group consisting of a cube, cuboid, sphere, ellipsoid, spheroid, ovoid, or pyramid.

The infill particles employed according to the present invention may comprise two or more sizes of infill particle. In some embodiments, a plurality of infill particles of the invention may comprise a first type of infill particle and a second type of infill particle, wherein said first type of infill particle has a volume at least 2 or 3 times the size of the second type of infill particle. For example, two different sizes of cube may be employed, such as cubes which are 1mm x 1mm x 1mm, together with cubes which are 2mm x 2mm x 2mm.

The particles of the invention may be employed with a second particle made of a different substrate. In preferred embodiments, the second particle is sand, e.g. silica sand.

Artificial turf systems of the invention may comprise a lower layer of particles and an upper layer of particles, wherein the upper layer comprises particles of the invention and the lower layer comprises a second particle type suitable for use as an artificial turf infill. In preferred embodiments, the second particle type is sand. In preferred embodiments, the sand is silica sand. In such arrangements, the infill particles of the invention may be termed performance infill and the second particle type (e.g. sand) is a stabilising infill.

In some embodiments, the infill particles have a packing factor of about 1.5, 2, 2.5, or 3, preferably about 2. Packing factor is a measure of the overall volume of a packed group of particles, divided by the sum total volume of all the particles individually. Hence, the added volume in the collection of particles (as compared to the sum total volume of all the particles individually) is the empty space between the packed particles.

The packing factor thus reflects the volume of air that exists between the particles. Air between the particles contributes to the softness and technical properties of the infill (and the turf surface when the infill is applied thereto). Therefore, having a packing factor above 1 can be advantageous. In particular, infill particles of the invention may have a packing factor of 1 to 3, 1.5 to 2.5 or about 2.

The present invention also provides a method of producing the infill particle(s) of the invention, the method comprising:

soaking in a salt solution a particle made of wood and having a volume of up to about 512 mm$^3$; and optionally drying the soaked particle.

In the invention, wood is a preferred example of cellulosic and/or hemicellulosic particles in general. Hence, the invention also provides a method of producing the infill particle(s) of the invention, the method comprising:

soaking in a salt solution a particle made of cellulosic and/or hemicellulosic material and having a volume of up to about 512 mm$^3$; and optionally drying the soaked particle.

In embodiments, the particle made of wood has a volume of up to about 512, 500, 400, 343, 300, 216, 200, 175, 125, 120, 115, 110, 105, 100, 95, 90, 85, 80, 75, 70, 65, 60, 55, 50, 45, 40, 35, 30, 25, 20, 15, or 10 mm$^3$. The volume of the particle made of wood may be at least about 0.001, 0.008, 0.01, 0.1, 1, 2, 3, 4 or 5 mm$^3$. Preferably, the volume of the particle made of wood is between about 0.008 mm$^3$ and about 64, or between about 0.008 mm$^3$ and about 125 mm$^3$. More preferably, the volume of the particle made of wood is between about 0.1 mm$^3$ and about 125 mm$^3$. Most preferably the volume of the particle made of wood is between about 0.5 mm$^3$ and about 64 mm$^3$, e.g. between about 1mm$^3$ and about 10 or 20 mm$^3$, particularly around 8 mm$^3$. The volume should be understood as the size of the particle measured or calculated from its dimensions, the volume of a particle is not reduced just because it may contain pores (i.e. voids). Thus a preferred particle which is a cube of 2mm in each dimension has a volume of 8mm$^3$. Preferably, the particle made of wood has a volume of between about 0.001 mm$^3$ and about 512 mm$^3$, more preferably between about 0.008 mm$^3$ and about 125 mm$^3$, more preferably between about 1 mm$^3$ and about 64 mm$^3$, more preferably between about 1 mm$^3$ and about 27 mm$^3$.

Preferred features of the particles defined above apply *mutatis mutandis* to this method.

In embodiments, the particle made of wood has corners and edges, wherein said corners and edges are rounded.

The soaking step is sufficient to give the particles a salt content as described herein, i.e. at least 5%, preferably at least 10%, by weight of salt. The soaking step may be sufficient for the salt to penetrate throughout the particle.

The particles are soaked in salt water, wherein the water preferably has a salt concentration of at least about 200, 210, 220, 230, 240, 250, 260, 270, 280, 290, 300, 310, 320, 330, 340, 350 or 360 g/L (i.e. grams per litre). Preferably the salt solution is a saturated salt solution, the exact concentration at which saturation is reached will depend on the temperature of the water. Preferably the salt concentration is 300-400g/L, more preferably 320-380g/L, e.g. around 360g/L.

Prior to and/or during soaking, the salt solution (salted water) is preferably heated, for example to at least 50 °C, at least 70 or 75 °C or to around boiling point. Preferred temperatures are 70-80 °C, e.g. around 75 °C. Conveniently, the water may be heated prior to the addition of salt and the particles may then be added to the salted water/salt solution.

The rate of uptake of a liquid (e.g. water or salt water) by a sample of wood can be increased with decreasing liquid viscosity and with increasing surface area and permeability of the wood. The viscosity of the liquid (e.g. salt water) can be decreased, and the surface area (e.g. through cellulose and hemicellulose expansion) and permeability (e.g. through pore expansion) of the wood increased, by raising the temperature of the liquid and the wood respectively. Hence, by salinating the particles of wood in salt water at high temperature, the rate of salt uptake by the particles is increased significantly as compared to the same protocol at ambient temperature (i.e. the salt uptake stage can take as little as e.g. 15 minutes when conducted at high temperature, as opposed to days or weeks when conducted at ambient temperature). Soaking in a heated salt solution will usually, but not always, be preferred.

In the soaking method of the present invention, the liquid not only travels through the wood fibres/pores but also percolates through the cellulose and hemicellulose parts between the fibres/pores. This is facilitated by use of a high temperature liquid since this enables expansion of the cellulose and hemicellulose parts of the wood as explained above. The soaking of the wood substrate in high temperature salt water results in the formation of a wood particle in which salt is dispersed throughout the particle. The dispersion of salt throughout the particle of the invention is advantageous, for example compared to simply coating of the surface of the particle with salt. For example, dispersing the salt throughout the particle allows the particles of the invention to hold a higher quantity of salt as compared to a particle which is merely coated with salt. Additionally, dispersion of salt throughout the particle means that the advantageous properties of salt as described herein may be exhibited throughout the particle, for example in terms of resistance to degradation and resistance to freezing. Thus, by dispersion of salt throughout the infill particles of the invention, the advantageous properties associated with salt impregnation are enhanced.

The soaking method of the present invention is distinct from coating where only the surface of the particle will become coated and there is little penetration into the inner parts of the particles.

Hence, in the infill particle of the invention, the salt is dispersed (substantially or fully) throughout the particle. Alternatively worded, the entirety (or the whole, or all) of the particle is impregnated with the salt.

In some preferred embodiments, the soaking step is for about 5-60 minutes, preferably for about 5-10, 10-15, 15-20, 20-25, 25-30, 30-35, 35-40, 40-45, 45-50, 50-55, or 55-60 minutes. In some embodiments, the soaking step is for at least 10 minutes, at least 15 minutes or at least 20 minutes, more preferably at least 10 minutes. In some embodiments, the soaking step is for about 10-40 minutes, preferably for about 15-35 or 20-35 minutes, more preferably for about 30 minutes.

The method of producing the infill particle of the invention may further comprise, e.g. after the drying step, polishing the surface of the infill particle.

As used herein, "polishing" refers to a process of creating a smooth surface on the infill particle of the invention through abrasion and/or mechanical stress/pressure. As well as a smooth surface, the polishing results in rounding off of any edges/vertices and corners present on the particle. As discussed elsewhere herein, this may have beneficial properties in terms of performance and in sealing pores to prevent ingress of water in use.

Methods of polishing, for example polishing wood, are well known in the art. For example, it is well known to smooth the surfaces of wood by sanding using sandpaper. Sanding can be done mechanically using a sander or a sanding machine to which sandpaper is attached. In order to round corners of cubes and/or polish the particles a belt machine employing sandpaper of grade 200 may conveniently be used. A suitable machine is known as a wild-belt sanding machine, e.g. SANDTEQ-W-200 from the HOMAG group. "Polishing" and "sanding" are used synonymously herein.

Another method of polishing the infill particles of the invention is by running said particles through multiple cycles (e.g. 20,200 cycles or 40,200 cycles) of wearing using a wear simulation machine, for example the Lisport (i.e. Lisport classic) wear simulation machine.

Thus, the polishing step results in the production of an infill particle of the invention having a smooth or polished surface. This decreases the water absorbency of the infill particles. This is advantageous since water absorption is associated with degradation of infill particles composed of organic material.

Without wishing to be bound by theory, it is understood that reduced water absorption may be achieved through the polishing process by blocking the pores of the particle (or, more specifically, the pores of the wood of which the particle is composed). Thus, the polishing step may cause some of the outer pores of the infill particle of the invention to become sealed.

Methods of obtaining particles made of wood (e.g. for use in the salting process) are known in the art. For example, particles made of wood can be obtained by wood milling. Alternatively, particles made of wood can be obtained by cutting wood particles from wooden planks or veneers. Wooden planks and veneers can be cut using one or more well-known bladed tools, for example a saw, e.g. scroll saw, hack saw, jig saw, circular saw, mitre saw, reciprocating saw, or trimming saw. Most suitably, a band saw (for example the Scheppach Båndsag HBS 261) can be used to cut a wooden plank down to size. Optionally a guillotine cutter can be used (e.g. after cutting using a heavy-duty instrument such as a band saw) to cut the particles precisely; the spacing of the blades of the guillotine cutter can be adjusted in order to achieve the desired dimensions of the wood particles cut from the plank. Thus a band saw may be used to produce wood which is of the desired particle size in two dimensions and a guillotine may then be used to produce the particles themselves by cutting to the desired size also in the third dimension.

In the invention, wood is a preferred example of cellulosic and/or hemicellulosic particles in general. Hence, the above method also applies to obtaining particles made of other cellulosic and/or hemicellulosic material.

In a further aspect, the present invention provides a method of producing wooden infill particles for artificial turf, the method comprising cutting wood to form particles having a volume per particle of up to about 512 mm$^3$ (preferably 1-8 mm$^3$) which are cuboid in shape, preferably cubes, and then sanding (polishing) the cut particles in order to round the corners thereof. Preferred features of the particles and the cutting and sanding methods described elsewhere herein apply, *mutatis mutandis,* to this aspect of the invention.

In the invention, wood is a preferred example of cellulosic and/or hemicellulosic particles in general. Hence, the above method also applies to producing particles made of other cellulosic and/or hemicellulosic material for artificial turf.

In embodiments, the rounded particle has a volume of up to about 512, 500, 400, 343, 300, 216, 200, 175, 125, 120, 115, 110, 105, 100, 95, 90, 85, 80, 75, 70, 65, 60, 55, 50, 45, 40, 35, 30, 25, 20, 15, or 10 $mm^3$. The volume of the rounded particle may be at least about 0.001, 0.008, 0.01, 0.1, 1, 2, 3, 4 or 5 $mm^3$. Preferably, the volume of the rounded particle is between about 0.008 $mm^3$ and about 64, or between about 0.008 $mm^3$ and about 125 $mm^3$. More preferably, the volume of the rounded particle is between about 0.1 $mm^3$ and about 125 $mm^3$. Most preferably the volume of the rounded particle is between about 0.5 $mm^3$ and about 64 $mm^3$, e.g. between about 1 $mm^3$ and about 10 or 20 $mm^3$, particularly around 8 $mm^3$. The volume should be understood as the size of the particle measured or calculated from its dimensions, the volume of a particle is not reduced just because it may contain pores (i.e. voids). Thus a preferred particle which is a cube of 2mm in each dimension has a volume of 8$mm^3$. Preferably, the rounded particle has a volume of between about 0.001 $mm^3$ and about 512 $mm^3$, more preferably between about 0.008 $mm^3$ and about 125 $mm^3$, more preferably between about 1 $mm^3$ and about 64 $mm^3$, more preferably between about 1 $mm^3$ and about 27 $mm^3$.

The rounded particle described above may be impregnated with salt (e.g. by the soaking method described elsewhere herein) thus producing an infill particle of the invention.

The terms "synthetic turf", and "artificial turf" are used interchangeably herein.

By "artificial turf infill" or "infill for artificial turf", it is meant an infill suitable for (or suitable for use on) artificial turf, i.e. as part of an artificial turf system. By "artificial turf" it is meant a turf which is man-made, manufactured or artificial which is suitable for sporting activity. Examples of artificial turf include hybrid, first generation (1G), second generation (2G) and third generation (3G) turf. These terms are well known in the art and are described above.

The infill of the invention is suitable for all artificial or synthetic surfaces. In preferred embodiments, the infill of the invention is suitable for use on first, second or third generation artificial turf, preferably third generation artificial turf.

Thus, in a further aspect, the invention provides an artificial turf system, comprising:

an artificial turf carpet, the artificial turf carpet comprising artificial turf fibres; and
a plurality of infill particles of the invention.

In preferred embodiments, the plurality of infill particles is distributed evenly across the artificial turf.

In preferred embodiments, the artificial turf system further comprises sand.

The artificial turf system can be any artificial turf system suitable for sport. In preferred embodiments, the artificial turf system is an artificial turf system for (or suitable for) ball games, preferably association football or soccer.

In preferred embodiments the turf carpet comprises a backing. The turf carpet may comprise a primary backing and a secondary backing (in addition to the artificial turf fibres). In some embodiments, the primary backing is polypropylene (PP) and the secondary backing is polyurethane (PU) or latex.

The artificial turf carpet comprises artificial turf fibres. The terms "fibres" and "pile" are used interchangeably herein. The artificial turf fibres can be any fibres suitable for use as part of said artificial turf system. The artificial turf fibres may be monofilament fibres, fibrillated fibres, monofilament fibres with a stem, or a combination thereof, preferably monofilament fibres. In preferred embodiments, the artificial turf fibres comprise or consist of polypropylene, polyethylene, nylon (polyamide) or a combination thereof. In embodiments, the artificial turf fibres have a height of about 25-70 mm. In preferred embodiments, the artificial turf fibres have a height of about 25-30, 30-35, 35-40, 40-45, 45-50, 55-60, 60-65, or 65-70 mm. In preferred embodiments, the artificial turf fibres have a height of about 30-50mm, preferably about 40 mm.

In the artificial turf system of the invention, the plurality of infill particles is distributed between a plurality of the artificial turf fibres. In other words, the (plurality of) infill particles are arranged between a plurality of said artificial turf fibres. Alternatively viewed, the plurality of infill particles is distributed or arranged between the grains of said artificial turf fibres, i.e. a grain being the point where a fibre protrudes from, or emanates from, or is attached to, the (underlying) artificial turf carpet. The plurality of infill particles may be located at any point between the fibres, e.g. any point horizontally or vertically among the fibres.

In an aspect, the invention provides a grass turf or grass bed or football pitch comprising the infill particle or plurality of infill particles of the invention. In some embodiments, the grass turf or grass bed or football pitch (further) comprises sand.

The invention provides an infill particle produced by any method of the invention disclosed herein, wherein said infill particle has the features of an infill particle of the invention as defined herein.

In a further aspect, the invention provides use of the infill particle of the invention, or the plurality of infill particles of the invention, as an infill for artificial turf. In embodiments, the artificial turf is a third generation (3G) artificial turf.

The invention will now be further described in the following non-limiting Examples with reference to the following figures in which:

Figure 1 provides a graphical representation of the data in Table 18.

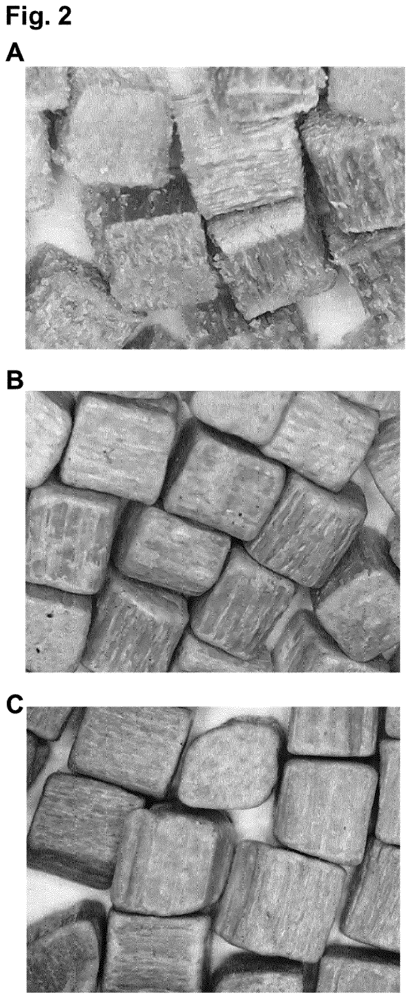

Figure 2 shows images of infill particles of the invention - each made of birch wood, 2x 2x 2 mm size, with salt content of 30.5% by weight. Figure 2A shows fresh, unused versions of said infill particles; it can be noted that these particles have a rough, salty surface. Figure 2B shows infill particles of the same type after running the particles through 20,200 cycles on a Lisport (i.e. Lisport classic) wear simulation machine; it can be noted that the particles are visibly smooth, polished and shiny. Figure 2C shows infill particles of the same composition after running the particles through 40,200 cycles on a Lisport (i.e. Lisport classic) wear simulation machine; it can be noted that the appearance of the particles is essentially unchanged as compared to the particles of Figure 2B.

Figure 3 shows results of Example 4 - it is an image of infill particles of the invention (each made of birch wood, 2x 2x 2 mm size, with salt content of 30.5% by weight) after 5 years on artificial turf in harsh weather conditions. As Figure 3 demonstrates, the infill particles are still stable.

## **EXAMPLES**

### EXAMPLE 1 - METHOD FOR CUTTING WOOD PLANKS TO PRODUCE GRANULES

- A standard band saw (Scheppach Båndsag HBS 261), was used to cut a 100 x 100 x 5000 mm plank down to 2mm in two dimensions.
- Then, a guillotine cutter, with a cutting window of 500 x 30 mm, with support was used to cut 2x2x2mm cubes accurately. 10 high performance blades placed side by side with 2mm gaps achieve a rate of cutting of 100 meters per minute.

### EXAMPLE 2 - SALTING OF WOODEN PARTICLES TO PRODUCE INFILL PARTICLES OF THE INVENITON

### EXAMPLE 2A - METHODOLOGY AND RESULTS

Process

1. Add water to a large container.

2. Add salt to the water.

3. Incubate with heating (e.g. 75 °C) until all the salt is dissolved.

4. Add wooden granules (particles) to the salt water.

5. Soak for at least 15 minutes.

6. Drain water, then collect wet granules.

7. Put wet granules on table for drying.

Table 1 - "2mm Granules" means granules with dimensions of 2x2x2 mm. "1mm Granules" means granules with dimensions of 1x1x1mm.

| | Ingredients for salting process | | | Wet granules (granules immediately after soaking in salt water) | | | Residual water | | |
|---|---|---|---|---|---|---|---|---|---|
| Day 1 | Water (litres) | Salt (litres) | 1mm Granules (litres) | Volume (litres) | Mass (9) | Density (g/ml) | Volume (litres) | Mass (9) | Density (g/ml) |
| Test | 4 | 1 | 1,5 | 1,95 | 1420 | 0,73 | | | |

(continued)

| | Ingredients for salting process | | | Wet granules (granules immediately after soaking in salt water) | | | Residual water | | |
|---|---|---|---|---|---|---|---|---|---|
| Day 1 | Water (litres) | Salt (litres) | 1mm Granules (litres) | Volume (litres) | Mass (9) | Density (g/ml) | Volume (litres) | Mass (9) | Density (g/ml) |
| 1 | 4 | 1 | 2,5 | 3,1 | 1843 | 0,59 | | | |
| 2 | 4 | 1 | 2,5 | 3 | 1940 | 0,65 | 2,65 | 3105 | 1,17 |
| 3 | 4 | 1 | 2,6 | 3,4 | 1889 | 0,56 | 3,2 | 3775 | 1,18 |
| 4 | 4 | 1 | 2,5 | 3,1 | 2006 | 0,65 | | | |
| 5 | 4 | 1 | 2,5 | 3,4 | 1966 | 0,58 | | | |
| 6 | 4 | 1 | 2,6 | 3,4 | 2134 | 0,63 | 3 | 3470 | 1,16 |
| | Total volume of granules | | 16,7 | Average density | | 0,63 | | | |
| | | | | | | | | | |
| Day 2 | Water (litres) | Salt (litres) | 2mm Granules (litres) | Volume (litres) | Mass (9) | Density (g/ml) | Volume (litres) | Mass (9) | Density (g/ml) |
| 1 | 4 | 1 | 2,5 | 3,1 | 2181 | 0,70 | 2,54 | 3008 | 1,18 |
| 2 | 5 | 1,25 | 3,0 | 3,4 | 2314 | 0,68 | 3,8 | 4427 | 1,17 |
| 3 | 4 | 1 | 2,5 | 3,1 | 2108 | 0,62 | | | |
| 4 | 5 | 1,25 | 3,0 | 3,4 | 2479 | 0,73 | | | |
| 5 | 4 | 1 | 2,5 | 3,1 | 1913 | 0,62 | | | |
| 6 | 5 | 1,25 | 3,0 | 3,4 | 2314 | 0,68 | | | |
| | Total volume of granules | | 16,5 | Average density | | 0,67 | | | |

**Measurements**

- Density of wet granules 1mm: 0.63 g/ml
- Density of wet granules 2mm: 0.67 g/ml
- Density of salt: 1.25 g/ml
- Density of 30% w/v salt solution:

    ◦ 1.12 g/ml (density of salt solution during mixing (mass of 1 litre container/volume))
    ◦ 1.15 g/ml (density at start of salting process)
    ◦ 1.17 g/ml (density of residual water after removing wet salted granulate)

- Density of dry unsalted 2mm granules: 0.326 g/ml
- Density of dry salted 2mm granules: 0.426 g/ml
- Density of dry unsalted 1mm granules: 0.264 g/ml
- Density of dry salted 1mm granules: 0.325 g/ml
- Density of whole plate: 0.62 g/ml (weight/volume of 3 mm veneer)

Comparison of salt and volume residual water

- Saltwater:

  ◦ Volume = 5.8 litres,
  ◦ Density = 1.12 g/ml (5 litres of water and 1.25 litres salt gave a liquid volume of 5.8 litres)

- Residual water:

  ◦ Volume = 3.8 litres
  ◦ Density = 1.17 g/ml (indicates approximately 4% of evaporated water)

- Water absorbed into the granulate:

  o 1.95 litres, which gives 0.585 litres salt (736 gram)

- 3 litres dry granulate added; dry mass before salting process = 960 gram, after soaking in salt water = 1620 gram; difference 660 gram (ok comparison with 736 gram given some evaporation and salt precipitation).

Conclusions and observations

- All measurements indicate good salt saturation
- Increased temperature results in faster dissolution of salt
- Smaller particles clump more, absorb more water and need longer drying

EXAMPLE 2B - CALCULATION OF SALT CONTENT IN DRY SALTED 2mm GRANULES

Calculation of % by volume

In order to calculate the % of salt by volume in the dry salted particles, the following equation can be used:

$$(x)*\text{density of salt} + (1-x)*\text{density of dry unsalted granule} = \text{density of dry salted granule}$$

Wherein 100*x is the % by volume of salt in the dry salted granule (i.e. the % of the total volume of the granule which is made up of salt).

Thus, applying the following densities:

Density of dry unsalted 2mm granule = 0.326 g/ml

Density of dry salted 2mm granule = 0.426 g/ml

Density of salt = 1.25 g/ml

Putting the above values into the equation, gives:

$$(x)*1.25+(1-x)*0.326 = 0.426$$

thus

x = 0.104

thus the % by volume of salt in the dry salted **2mm** granule is **10.4 % by volume**

Calculation of % by mass (i.e. by weight)

Table 2

| Component of dry salted 2mm granule | % volume of component in dry salted 2mm granule | Original density of component (g/ml) | Mass of component in dry salted 2mm granule (g) |
|---|---|---|---|
| Salt | 10.4 % | 1.25 | 0.130 |
| Wood | 89.6 % | 0.33 | 0.296 |
| | | | Total mass = 0.426 |

Thus the % by mass of salt in the dry salted **2mm** granule (i.e. the % of the total mass of the granule which is made up of salt) is 0.130 / 0.426 = 0.305 = **30.5 % by mass (i.e. by weight)**

EXAMPLE 2C - CALCULATION OF SALT CONTENT IN DRY SALTED 1mm GRANULES

Calculation of % by volume

The same equation can be used as provided in Example 2B:

(x)*density of salt + (1-x)*density of dry unsalted granule = density of dry salted granule

Wherein 100*x is the % volume of salt in the dry salted granule (i.e. the % volume of the granule which is made up of salt).

Thus, applying the following densities into the equation:

Density of dry unsalted 1mm granules: 0.264 g/ml
Density of dry salted 1mm granules: 0.325 g/ml
Density of salt = 1.25 g/ml

gives:

$$(x)*1.25+(1-x)*0.264 = 0.325$$

thus

x = 0.0619

thus the % volume of salt in the dry salted **1mm** granule is **6.19 % by volume**

Calculation of % by mass

Table 3

| Component of dry salted 2mm granule | % by volume of component in dry salted 1mm granule | Original density of component (g/ml) | Mass of component in dry salted 1mm granule (g) |
|---|---|---|---|
| Salt | 6.19 % | 1.25 | 0.07738 |
| Wood | 93.81 % | 0.264 | 0.2477 |
| | | | Total mass = 0.325 |

Thus the % mass of salt in the dry salted **1mm** granule is 0.07738 / 0.325 = **23.8 % by mass (i.e. by weight)**

EXAMPLE 3 - SPORTS LABS LTD TESTING AN INFILL OF THE INVENTION BY PERFORMANCE REQUIREMENTS OUTLINED IN EN 15330-1: 2013

This example provides data from testing conducted by Sports Labs Ltd to confirm the suitability of the infill particles of the invention for use on artificial turf. The tests provided below were carried out in accordance with BS EN 15530-1: 2013 (Surfaces for Sports Areas - Synthetic Turf and Needle-punched Surfaces Primarily Designed for Outdoor Use).

BS EN 15530-1: 2013 is a document, published in 2013 by the British Standards Institution (BSI), which provides a selection of tests to be carried out to meet the requirements of an infill for artificial turf. Each test is itself described in detail in a separate published document, and each of these documents is also designated with a particular "EN number" for clear and unambiguous identification. The EN number of each test done on the infill particles is provided in Table 18.

The properties of the infill particles were also tested after being put through wear simulation on a Lisport (i.e. Lisport classic) wear simulation machine. The Lisport wear simulation machine comprises two heavy rollers having rounded 13mm nylon studs. The apparatus traverses the sample (i.e. the artificial turf comprising infill) for a prescribed number of cycles. The studs bear down on the sample and simulate wear caused by years of sporting use.

The particles tested were each made of birch wood, 2x 2x 2 mm size, with salt content of 30.5% by weight, as calculated in Example 2.

Table 4

| Product Description | | |
|---|---|---|
| **Project Name:** | GOE-IP 2mm Infill Trial | |
| **Artificial turf Name:** | Standard 40mm monofilament artificial turf | |
| **Performance Infill:** | GOE-IP 2mm Infill | 5 kg/m2 (approx. 15mm) |
| **Stabilising Infill:** | Silica Sand | 18 kg/m2 (approx. 12mm) |
| **Shockpad:** | 12mm 50k/m3 | Prefabricated closed-cell PE foam |
| **Substrate:** | Concrete | |
| **Number of Conditioning Rolls:** | 50 Rolls | |
| **Free Pile Height:** | 13 mm | |

Table 5

| Performance Results Summary | | | | | |
|---|---|---|---|---|---|
| **Property** | **Test Method** | **Test Condition** | **Mean Result** | **Requirement** | **Pass/ Fail** |
| **Ball Rebound** | EN 12235: 2013 | DRY | **58 %** | 45 - 75 % | **PASS** |
| | | WET | **54 %** | | |
| | | 20,200 Lisport Cycles | **53 %** | | |
| | | 40,200 Lisport Cycles | **57 %** | | |
| **Ball Roll** | EN 12234: 2013 | DRY | **5.1 m** | 4 - 10.0 m | **PASS** |
| | | WET | **5.3 m** | | |
| **Shock Absorption** | EN 14808: 2005 | DRY | **62 %** | 55 - 70 % | **PASS** |
| | | WET | **62 %** | | |
| | | 20,200 Lisport Cycles | **61 %** | | |
| | | 40,200 Lisport Cycles | **60 %** | | |
| **Vertical Deformation** | EN 14809: 2005 | DRY | **6.5 mm** | 4 - 9 mm | **PASS** |
| | | WET | **6.6 mm** | | |
| | | 20,200 Lisport Cycles | **6.5 mm** | | |
| | | 40,200 Lisport Cycles | **6.2 mm** | | |
| **Rotational Resistance** - **Studded** | EN 15301-1: 2007 | DRY | **43 Nm** | 25 - 50 Nm | **PASS** |
| | | WET | **41 Nm** | | |
| | | 20,200 Lisport Cycles | **42 Nm** | | |

(continued)

| Performance Results Summary | | | | | |
|---|---|---|---|---|---|
| **Property** | **Test Method** | **Test Condition** | **Mean Result** | **Requirement** | **Pass/ Fail** |
| | | 40,200 Lisport Cycles | **43 Nm** | | |
| **Rotational Resistance** - Dimpled | EN 15301-1: 2007 | DRY | **29 Nm** | 25 - 50 Nm | **PASS** |
| | | WET | **28 Nm** | | |
| **Water Permeability** | EN 12616: 2013 | FILLED TURF | **1798 mm/hr** | ≥ 500 mm/hr | **PASS** |

Table 6

| Ball Rebound - Overview | |
|---|---|
| A football is released from a height of 2.0m and its rebound from the surface is calculated in accordance with EN 12235 and expressed as a percentage relative to that of a rebound on a concrete substrate. A single drop test is conducted at 5 locations across the sample. | |
| **Ball Rebound** - **Requirements** | |
| **Test Method** | **EN12235: 2013** |
| **Requirement** | 45 - 75 % |
| **Ball Rebound** - **Test Equipment** | |
| **SL Equipment Number** | SL113, SL198, SL282, SL481 |
| **Uncertainty Value** | (k=2.52) ± 2.21 % |

Table 7

| Ball Rebound - Results | | | | | | |
|---|---|---|---|---|---|---|
| **Test Date:** | 20/08/2020 | | 10/09/2020 | | 22/09/2020 | |
| **Air Temperature:** | 23.3 | | 23.4 | | 23.4 | |
| **Surface Temperature:** | 22.0 | | 21.1 | | 22.0 | |
| **Humidity:** | 45 | | 43 | | 45 | |
| **Test Condition** | **DRY** | | **WET** | | **20,200 Lisport Cycles** | |
| **Concrete Value** | 1.35 m | | 1.35 m | | 1.35 m | |
| **RESULTS** | **Result (m)** | **Percentage** | **Result (m)** | **Percentage** | **Result (m)** | **Percentage** |
| **Drop 1** | 0.80 | 59 | 0.72 | 53 | 0.73 | 54 |
| **Drop 2** | 0.76 | 56 | 0.73 | 54 | 0.73 | 54 |
| **Drop 3** | 0.78 | 58 | 0.71 | 53 | 0.70 | 52 |
| **Drop 4** | 0.76 | 56 | 0.74 | 55 | - | - |
| **Drop 5** | 0.78 | 58 | 0.73 | 54 | - | - |
| **Mean Result** | | **58 %** | | **54 %** | | **53 %** |
| **Requirement** | 45 - 75 % | | 45 - 75 % | | 45 - 75 % | |
| **Pass/Fail** | **PASS** | | **PASS** | | **PASS** | |

Table 8

| Ball Roll - Overview |
|---|
| A football is rolled down a 45±2° ramp onto the test surface and the distance the ball rolls is measured. This is repeated 5 times and the mean ball value is calculated. The test is then repeated in the opposite direction to take the lean of the pile into account. |

(continued)

| Ball Roll - Requirements | |
|---|---|
| Test Method | **EN12234: 2013** |
| Requirement | 4 - 10.0 m |
| Ball Roll - Test Equipment | |
| SL Equipment Number | SL277, SL061, SL198 |
| Uncertainty Value | (k=2.83) $\pm$ 0.05 m |

Table 9

| Ball Roll - Results | | | | |
|---|---|---|---|---|
| Test Date: | 21/09/2020 | | 21/09/2020 | |
| Air Temperature: | 23.2 | | 23.2 | |
| Surface Temperature: | 22.9 | | 21.7 | |
| Humidity: | 45 | | 45 | |
| Test Condition | **DRY** | | **WET** | |
| Test Direction | **With Pile** | **Against Pile** | **With Pile** | **Against Pile** |
| RESULTS | Result (m) | Result (m) | Result (m) | Result (m) |
| Roll 1 | 5.01 | 5.11 | 5.34 | 5.27 |
| Roll 2 | 5.23 | 5.27 | 5.35 | 5.38 |
| Roll 3 | 4.98 | 5.19 | 5.41 | 5.29 |
| Roll 4 | 4.89 | 5.11 | 5.52 | 5.33 |
| Roll 5 | 5.03 | 5.12 | 5.21 | 5.31 |
| Mean Result | **5.03** | **5.16** | **5.37** | **5.32** |
| Overall Mean Result | **5.09 m** | | **5.34 m** | |
| Requirement | 4 - 10.0 m | | 4 - 10.0 m | |
| Pass/Fail | **PASS** | | **PASS** | |

Table 10

| Force Reduction - Overview | |
|---|---|
| A mass is allowed to fall onto a spring placed on the test sample and the maximum force applied is recorded. The difference between this value and the maximum force measured on a concrete substrate is reported as the force reduction value. The test is conducted 3 times on the same location, and the mean values of the second and third drops is determined as the force reduction value. The test is conducted on a total of 3 locations across the sample. | |
| Force Reduction - Requirements | |
| Test Method | **EN14808: 2005** |
| Requirement | 55-70% |
| Force Reduction - Test Equipment | |
| SL Equipment Number | SL121, SL281, SL053 |
| Uncertainty Value | (k=2.24) $\pm$ 2.13 % |

Table 11

| Force Reduction - Results | | | |
|---|---|---|---|
| Test Date: | 10/09/2020 | 10/09/2020 | 22/09/2020 |
| Air Temperature: | 23.3 | 23.4 | 23.3 |
| Surface Temperature: | 22.2 | 21.0 | 21.9 |
| Humidity: | 45 | 43 | 45 |
| Test Condition | DRY | WET | 20,200 Lisport Cycles |
| RESULTS | Result (%) | Result (%) | Result (%) |
| Location 1 | 62.2 | 62.5 | 60.7 |
| Location 2 | 62.2 | 61.6 | 61.4 |
| Location 3 | 62.7 | 61.4 | 61.4 |
| Mean Result | **62.4 %** | **61.8 %** | **61.1 %** |
| Requirement | 55 - 70 % | 55 - 70 % | 55 - 70 % |
| Pass/Fail | **PASS** | **PASS** | **PASS** |

Table 12

| Vertical Deformation - Overview | |
|---|---|
| A mass is allowed to fall onto a spring placed on the test sample and the maximum deformation is recorded. The test is conducted 3 times on the same location, and the mean values of the second and third drops is determined as the vertical deformation value. The test is conducted on a total of 3 locations across the sample | |
| **Vertical Deformation - Requirements** | |
| Test Method | **EN14809: 2005** |
| Requirement | 4-9mm |
| **Vertical Deformation - Test Equipment** | |
| SL Equipment Number | SL121, SL118, SL053, SL107, SL108 |
| Uncertainty Value | (k=2.00) $\pm$ 0.83 mm |

Table 13

| Vertical Deformation - Results | | | |
|---|---|---|---|
| Test Date: | 10/09/2020 | 10/09/2020 | 22/09/2020 |
| Air Temperature: | 23.4 | 23.3 | 23.4 |
| Surface Temperature: | 22.1 | 21.0 | 22.1 |
| Humidity: | 45 | 44 | 45 |
| Test Condition | DRY | WET | 20,200 Lisport Cycles |
| RESULTS | Result (mm) | Result (mm) | Result (mm) |
| Location 1 | 6.3 | 6.5 | 6.2 |
| Location 2 | 6.8 | 6.5 | 6.8 |
| Location 3 | 6.3 | 6.7 | 6.4 |
| Mean Result | **6.5 mm** | **6.6 mm** | **6.5 mm** |
| Requirement | 4 - 9 mm | 4 - 9 mm | 4-9 mm |
| Pass/Fail | **PASS** | **PASS** | **PASS** |

Table 14

| Rotational Resistance - Overview | |
|---|---|
| The force required to initiate rotational movement of a studded or dimpled test sole in contact with the surface is measured. The test is conducted at 5 locations across the sample. | |
| **Rotational Resistance - Requirements** | |
| **Test Method** | **EN15301-1: 2007** |
| **Requirement** | 25 - 50 Nm |
| **Rotational Resistance - Test Equipment** | |
| **SL Equipment Number** | SL098, SL194, SL224 |
| **Uncertainty Value** | (k=2.11) $\pm$ 2.89 Nm |

Table 15

| Rotational Resistance - Results | | | | | |
|---|---|---|---|---|---|
| **Test Date:** | 20/08/2020 | | 20/08/2020 | | 22/09/2020 |
| **Air Temperature:** | 23.3 | | 23.4 | | 23.4 |
| **Surface Temperature:** | 22.0 | | 22.0 | | 22.0 |
| **Humidity:** | 45 | | 45 | | 45 |
| **Test Condition** | **DRY** | | **WET** | | **20,200 Lisport Cycles** |
| **RESULTS** | **STUDDED** | **DIMPLED** | **STUDDED** | **DIMPLED** | **STUDDED** |
| **Location 1** | 43 | 31 | 42 | 27 | 44 |
| **Location 2** | 45 | 27 | 42 | 27 | 39 |
| **Location 3** | 43 | 29 | 42 | 26 | 42 |
| **Location 4** | 42 | 30 | 41 | 28 | - |
| **Location 5** | 43 | 30 | 39 | 30 | - |
| **Mean Result** | **43 Nm** | **29 Nm** | **41 Nm** | **28 Nm** | **42 Nm** |
| **Requirement** | 25 - 50 Nm | | 25 - 50 Nm | | 25 - 50 Nm |
| **Pass/Fail** | **PASS** | | **PASS** | | **PASS** |

Table 16

| Water Permeability - Overview | |
|---|---|
| The rate at which water passes vertically through the sample or artificial turf carpet is measured. A sample is clamped in a single-ring infiltrometer and the time taken for the water to fall by 20mm is recorded. The result in millimetres per hour is calculated, and the test is repeated 5 times to obtain a mean water permeability value. | |
| **Water Permeability - Requirements** | |
| **Test Method** | **EN12616: 2013** |
| **Requirement** | $\geq$ 500 mm/hr |
| **Water Permeability - Test Equipment** | |
| **SL Equipment Number** | SL023, SL071, SL215 |

(continued)

| Water Permeability - Test Equipment | |
|---|---|
| **Uncertainty Value** | (k=2.37) ± 14.3 % |

Table 17

| Water Permeability - Results | |
|---|---|
| **Test Date:** | 21/09/2020 |
| **Air Temperature:** | 23.1 |
| **Surface Temperature:** | 22.4 |
| **Humidity:** | 44 |
| **Water Temperature:** | 16.4 |
| **Test Condition** | **FILLED SAMPLE** |
| **RESULTS** | **Result (s)** |
| **Test 1** | 35.9 |
| **Test 2** | 42.1 |
| **Test 3** | 39.0 |
| **Test 4** | 44.2 |
| **Test 5** | 39.0 |
| **Result (mm/h)** | **1798 mm/hr** |
| **Requirement** | ≥ 500 mm/hr |
| **Pass/Fail** | **PASS** |

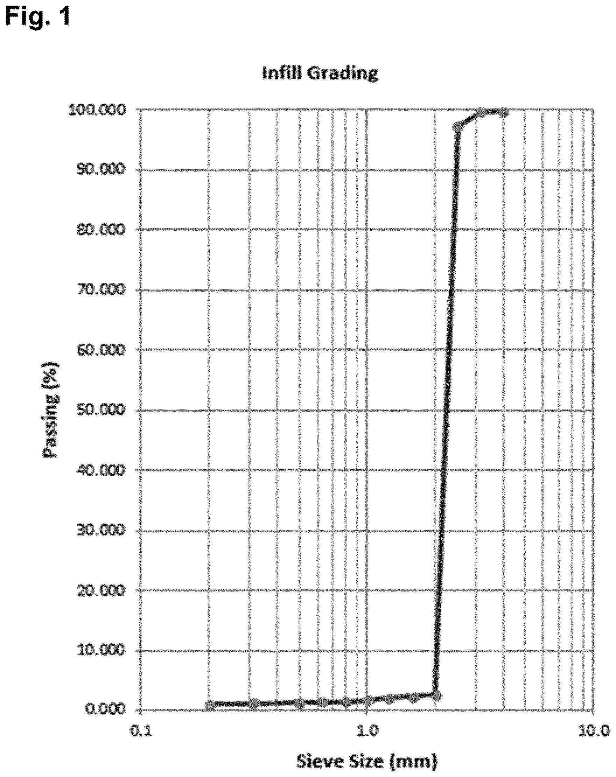

Table 18 shows results from passing of a collection of infill particles of the invention - birch wood, 2x 2x 2 mm size through a sieve to confirm the size distribution of the particles. The results below confirm that the particles are of the asserted size. For a graph of the data of Table 18, see Figure 1.

| Sieve Size (mm) | Passing (%) |
|---|---|
| 4.000 | 99.9 |
| 3.150 | 99.7 |
| 2.500 | 97.4 |
| 2.000 | 2.5 |
| 1.600 | 2.3 |
| 1.250 | 2.0 |
| 1.000 | 1.7 |
| 0.800 | 1.4 |
| 0.630 | 1.3 |
| 0.500 | 1.2 |
| 0.315 | 1.1 |
| 0.200 | 1.0 |
| Passing to base tray | 0.5 |

Table 19

| Property | Test Method | Mean Result | Requirement | Pass/ Fail |
|---|---|---|---|---|
| **Particle Size** | EN 933-1: 2012 | 2.0 - 2.5 mm | Same d & D | **PASS** |
| **Particle Shape** | EN 14955: 2005 | B2 | Similar Shape | **PASS** |
| **Loose Bulk Density** | EN 1097-3: 1998 | 426 kg/m3 | $\leq \pm$ 15 % | **PASS** |
| **Colour** | * Visual | Beige | Similar Colour | **PASS** |

Conclusion

The product submitted was tested in accordance with the performance requirements outlined in EN 15330-1: 2013. Based upon the test results the product supplied met all performance requirements of EN 15330-1: 2013 for surfaces designed primarily for football.

Table 20 shows technical results of infill particles of the invention - each made of birch wood, 2x 2x 2 mm size - which have been put through 40,200 cycles on a Lisport (i.e. Lisport classic) wear simulation machine. An image of the particles after the 40,200 cycles is shown is Figure 2C; it can be noted that the particles are visibly smooth, polished and shiny.

This method not only simulates wear but also is a suitable method for providing particles of the invention having rounded corners, which may be preferred in some cases.

| Performance Results - Additional 20,000 Lisport Classic Cycles | | | | | |
|---|---|---|---|---|---|
| **Property** | **Test Method** | **Test Condition** | **Mean Result** | **Requireme nt** | **Pass/ Fail** |
| **Ball Rebound** | EN 12235: 2013 | 40,200 Lisport Cycles | **57 %** | 45 - 75 % | **PASS** |
| **Shock Absorption** | EN 14808: 2005 | 40,200 Lisport Cycles | **60 %** | 55 - 70 % | **PASS** |
| **Vertical Deformation** | EN 14809: 2005 | 40,200 Lisport Cycles | **6.2 mm** | 4 - 9 mm | **PASS** |
| **Rotational Resistance** - **Studded** | EN 15301-1: 2007 | 40,200 Lisport Cycles | **43 Nm** | 25 - 50 Nm | **PASS** |

Table 21

| Test Method, Equipment and Uncertainty Value Summary | | | |
|---|---|---|---|
| **Test Method** | | **SL Equipment Number** | **Uncertainty Value** |
| Ball Rebound | EN 12235: 2013 | SL113, SL198, SL282, SL481 | (k=2.52) $\pm$ 2.21 % |
| Ball Roll | EN 12234: 2013 | SL277, SL061, SL198 | (k=2.83) $\pm$ 0.05 m |
| Shock Absorption | EN 14808: 2005 | SL121, SL281, SL053 | (k=2.24) $\pm$ 2.13 % |
| Vertical Deformation | EN 14809: 2005 | SL121, SL118, SL053, SL107, SL108 | (k=2.00) $\pm$ 0.83 mm |
| Rotational Resistance | EN 15301-1: 2007 | SL098, SL194, SL224 | (k=2.11) $\pm$ 2.89 Nm |
| Water Permeability | EN 12616: 2013 | SL023, SL071, SL215 | (k=2.37) $\pm$ 14.3 % |
| Simulated Use | EN 15306: 2014 | SL201 | - |
| Particle Size | EN 933-1: 2012 | SL160-169 | - |
| Particle Shape | EN 14955: 2005 | Visual, SL020 | - |
| Loose Bulk Density | EN 1097-3: 1998 | SL020, SL227 | (k=2.86) $\pm$ 0.004 Mg/m$^3$ |
| Thickness | EN 1969: 2000 | SL290 | (k=2.00) $\pm$ 0.14 mm |

EXAMPLE 4 - STABILITY OF INFILL PARTICLES OF THE INVENTION ON ARTIFICIAL TURF

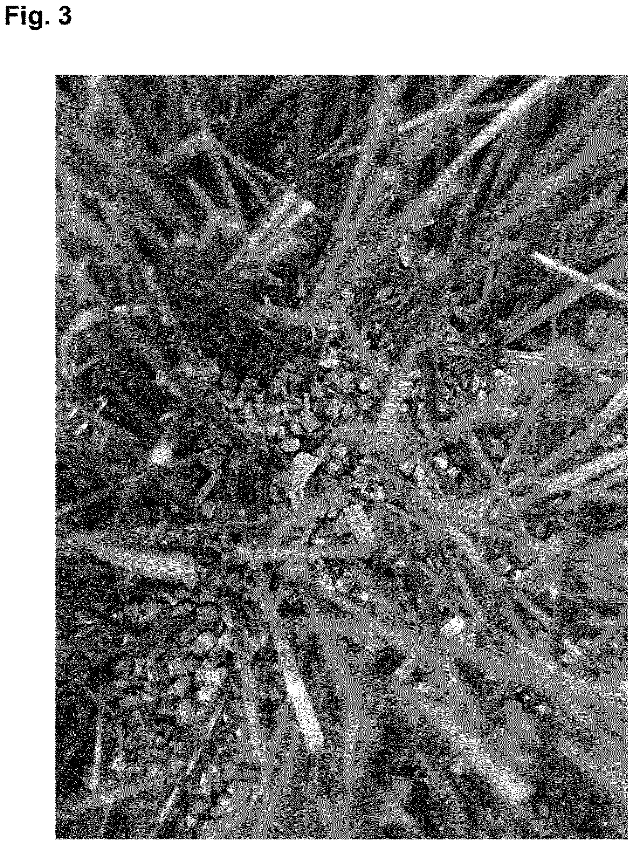

A group of infill particles of the invention, each made of birch wood, with dimensions 2 x 2 x 2 mm and salt content of 30.5% by weight, was placed on a patch of artificial turf outdoors in Stavanger, Norway and left for 5 years. After those 5 years, the group of infill particles was analysed; it was found that the infill particles were still stable (Figure 3). This is particularly impressive given the harsh weather conditions in Stavanger.

EXAMPLE 5 - STABILITY OF INFILL PARTICLES OF THE INVENTION ON SOIL

A group of infill particles of the invention, each made of birch wood, with dimensions 2 x 2 x 2 mm and salt content of 30.5% by weight, was placed in soil outdoors in Stavanger, Norway. After 3 months the soil was analysed; it was found that the infill particles had fully degraded in the soil.

**Claims**

1.  An infill particle for artificial turf, wherein:

    said particle comprises a substrate which is impregnated with salt and said particle does not contain thermoplastic material;
    said substrate comprises cellulosic and/or hemicellulosic material; and
    said particle has a volume of up to about 512 mm$^3$;
    **characterised in that**
    said particle has a salt content of at least 5 % by weight, and
    said salt is dispersed throughout the particle.

2.  The infill particle of claim 1, wherein said substrate consists essentially of cellulosic and/or hemicellulosic material; or wherein said substrate consists of cellulosic and/or hemicellulosic material.

3.  The infill particle of claim 1 or claim 2, wherein said substrate has been obtained by milling or cutting.

4.  The infill particle of any one of claims 1 to 3, wherein said particle has a salt content of at least 20 % by weight.

5.  The infill particle of any one of claims 1 to 4, wherein said particle has a volume of between 0.001 mm$^3$ and 512 mm$^3$; preferably between 0.008 mm$^3$ and 125 mm$^3$; preferably between 1 mm$^3$ and 27 mm$^3$.

6.  The infill particle of any one of claims 1 to 5:

    wherein the particle has the shape of a cube, cuboid, sphere, ellipsoid, spheroid, ovoid, or pyramid, preferably a cube, more preferably a cube of dimensions 2mm x 2mm x 2mm;
    wherein the particle has corners, and wherein said corners are rounded; and/or
    wherein the particle has a smooth or polished surface.

7.  The infill particle of any one of claims 1 to 6, wherein said substrate is wood, preferably natural or raw wood; more preferably wherein the wood is softwood or hardwood; more preferably wherein the hardwood is birch wood.

8.  The infill particle of any one of claims 1 to 7, wherein the particle is impregnated with an oil or a preservative; preferably wherein the oil is a natural oil, and the preservative is a natural preservative; more preferably wherein the oil is linseed oil.

9.  A plurality of infill particles, wherein each infill particle is an infill particle as defined in any one of the preceding claims, and wherein the plurality of particles comprises two or more shapes of infill particle, and/or comprises two or more sizes of infill particle.

10. The plurality of infill particles of claim 9,

    wherein the two or more shapes are selected from the group consisting of a cube, cuboid, sphere, ellipsoid, spheroid, ovoid, or pyramid; and/or

wherein the plurality of infill particles comprises a first type of infill particle and a second type of infill particle, wherein said first type of infill particle has a volume at least 2 or 3 times the size of the second type of infill particle.

11. A method of producing the infill particle of any one of claims 1 to 8, the method comprising:

soaking in a salt solution a particle comprising a substrate which comprises cellulosic and/or hemicellulosic material, wherein the particle does not contain thermoplastic material and has a volume of up to about 512 mm$^3$; optionally
drying the soaked particle; and optionally
polishing the particle.

12. The method of claim 11 wherein the salt solution has been heated to at least 50 °C, preferably to around 75 °C; and/or wherein the particle remains in the salt solution for at least 10 minutes.

13. An artificial turf system, comprising:

an artificial turf carpet, the artificial turf carpet comprising artificial turf fibres;
a plurality of infill particles of any one of claims 1 to 10; and optionally sand.

14. The method of claim 11 or claim 12 comprising a step of obtaining the particle prior to the soaking step, the step comprising cutting cellulosic and/or hemicellulosic material to form particles having a volume per particle of up to about 512 mm$^3$ which are cuboid in shape, preferably cubes, and then sanding the cut particles in order to round the corners thereof.

15. Use of the infill particle of any one of claims 1 to 8 or the plurality of infill particles of claim 9 or claim 10 as an infill for artificial turf.

**Patentansprüche**

1. Füllungspartikel für Kunstrasen, wobei:

das Partikel ein Substrat umfasst, das mit Salz imprägniert ist, und das Partikel kein thermoplastisches Material enthält;
das Substrat Zellulose- und/oder Hemizellulosematerial umfasst; und
das Partikel ein Volumen von bis zu etwa 512 mm$^3$ aufweist;
**dadurch gekennzeichnet, dass**
das Partikel einen Salzgehalt von mindestens 5 Gew.-% aufweist, und
das Salz im gesamten Partikel dispergiert ist.

2. Füllungspartikel nach Anspruch 1, wobei das Substrat im Wesentlichen aus Zellulose- und/oder Hemizellulosematerial besteht; oder wobei das Substrat aus Zellulose- und/oder Hemizellulosematerial besteht.

3. Füllungspartikel nach Anspruch 1 oder Anspruch 2, wobei das Substrat durch Fräsen oder Schneiden erhalten worden ist.

4. Füllungspartikel nach einem der Ansprüche 1 bis 3, wobei das Partikel einen Salzgehalt von mindestens 20 Gew.-% aufweist.

5. Füllungspartikel nach einem der Ansprüche 1 bis 4, wobei das Partikel ein Volumen zwischen 0,001 mm$^3$ und 512 mm$^3$; vorzugsweise zwischen 0,008 mm$^3$ und 125 mm$^3$; vorzugsweise zwischen 1 mm$^3$ und 27 mm$^3$ aufweist.

6. Füllungspartikel nach einem der Ansprüche 1 bis 5:

wobei das Partikel die Form eines Würfels, Quaders, einer Kugel, eines Ellipsoids, Sphäroids, Ovoids oder einer Pyramide, vorzugsweise eines Würfels, bevorzugter eines Würfels mit Abmessungen von 2 mm x 2 mm x 2 mm aufweist;
wobei das Partikel Ecken aufweist und wobei die Ecken abgerundet sind; und/oder

wobei das Partikel eine glatte oder polierte Oberfläche aufweist.

7. Füllungspartikel nach einem der Ansprüche 1 bis 6, wobei das Substrat Holz, vorzugsweise natürliches oder rohes Holz ist; wobei das Holz bevorzugter Weichholz oder Hartholz ist; wobei das Hartholz bevorzugter Birkenholz ist.

8. Füllungspartikel nach einem der Ansprüche 1 bis 7, wobei das Partikel mit einem Öl oder einem Konservierungsmittel imprägniert ist; wobei das Öl vorzugsweise ein natürliches Öl ist und das Konservierungsmittel ein natürliches Konservierungsmittel ist; wobei das Öl bevorzugter Leinsamenöl ist.

9. Vielzahl von Füllungspartikeln, wobei jedes Füllungspartikel ein Füllungspartikel nach einem der vorstehenden Ansprüche ist, und wobei die Vielzahl von Partikeln zwei oder mehr Formen eines Füllungspartikels umfasst und/oder zwei oder mehr Größen eines Füllungspartikels umfasst.

10. Vielzahl von Füllungspartikeln nach Anspruch 9,

wobei die zwei oder mehr Formen aus der Gruppe ausgewählt sind, die aus einem Würfel, Quader, einer Kugel, einem Ellipsoid, einem Sphäroid, Ovoid oder einer Pyramide besteht; und/oder
wobei die Vielzahl von Füllungspartikeln einen ersten Füllungspartikeltyp und einen zweiten Füllungspartikeltyp umfasst, wobei der erste Füllungspartikeltyp ein Volumen aufweist, das mindestens der 2- oder 3-fachen Größe des zweiten Füllungspartikeltyps entspricht.

11. Verfahren zum Herstellen des Füllungspartikels nach einem der Ansprüche 1 bis 8, wobei das Verfahren umfasst:

Einweichen in einer Salzlösung eines Partikels, das ein Substrat umfasst, das Zellulose- und/oder Hemizellulosematerial umfasst, wobei das Partikel kein thermoplastisches Material enthält und ein Volumen von bis zu etwa 512 mm$^3$ aufweist; optional
Trocknen des eingeweichten Partikels; und optional
Polieren des Partikels.

12. Verfahren nach Anspruch 11, wobei die Salzlösung auf mindestens 50 °C, vorzugsweise auf etwa 75 °C erhitzt worden ist; und/oder
wobei das Partikel mindestens 10 Minuten lang in der Salzlösung verbleibt.

13. Kunstrasensystem, umfassend:

einen Kunstrasenteppich, wobei der Kunstrasenteppich Kunstrasenfasern umfasst;
eine Vielzahl von Füllungspartikeln nach einem der Ansprüche 1 bis 10; und optional Sand.

14. Verfahren nach Anspruch 11 oder Anspruch 12, das einen Schritt zum Erhalten des Partikels vor dem Einweichschritt umfasst, wobei der Schritt Schneiden von Zelluloseund/oder Hemizellulosematerial umfasst, um Partikel zu bilden, die ein Volumen je Partikel von bis zu etwa 512 mm$^3$ aufweisen, die quaderförmig, vorzugsweise Würfel sind, und danach Schleifen der geschnittenen Partikel, um die Ecken davon abzurunden.

15. Verwendung des Füllungspartikels nach einem der Ansprüche 1 bis 8 oder der Vielzahl von Füllungspartikeln nach Anspruch 9 oder Anspruch 10 als eine Füllung für Kunstrasen.

**Revendications**

1. Particule de remplissage pour gazon artificiel, dans laquelle :

ladite particule comprend un substrat qui est imprégné de sel et ladite particule ne contient pas de matériau thermoplastique ;
ledit substrat comprend un matériau cellulosique et/ou un hémicellulosique ; et
ladite particule présente un volume allant jusqu'à environ 512 mm$^3$ ;
**caractérisée en ce que**
ladite particule présente une teneur en sel d'au moins 5 % en poids, et
ledit sel est dispersé dans toute la particule.

**2.** Particule de remplissage selon la revendication 1, dans laquelle ledit substrat consiste sensiblement en un matériau cellulosique et/ou hémicellulosique ; ou dans laquelle ledit substrat consiste en un matériau cellulosique et/ou hémicellulosique.

**3.** Particule de remplissage selon la revendication 1 ou la revendication 2, dans laquelle ledit substrat a été obtenu par fraisage ou découpe.

**4.** Particule de remplissage selon l'une quelconque des revendications 1 à 3, dans laquelle ladite particule présente une teneur en sel d'au moins 20 % en poids.

**5.** Particule de remplissage selon l'une quelconque des revendications 1 à 4, dans laquelle ladite particule présente un volume compris entre 0,001 mm$^3$ et 512 mm$^3$; de préférence entre 0,008 mm$^3$ et 125 mm$^3$; de préférence entre 1 mm$^3$ et 27 mm$^3$.

**6.** Particule de remplissage selon l'une quelconque des revendications 1 à 5 :

dans laquelle la particule présente la forme d'un cube, d'un cuboïde, d'une sphère, d'un ellipsoïde, d'un sphéroïde, d'un ovoïde ou d'une pyramide, de préférence un cube, plus préférentiellement un cube de dimensions 2 mm x 2 mm x 2 mm ;
dans laquelle la particule présente des coins, et dans laquelle lesdits coins sont arrondis ; et/ou
dans laquelle la particule présente une surface lisse ou polie.

**7.** Particule de remplissage selon l'une quelconque des revendications 1 à 6, dans laquelle ledit substrat est du bois, de préférence du bois naturel ou brut ; plus préférentiellement dans laquelle le bois est du bois tendre ou du bois dur ; plus préférentiellement dans laquelle le bois dur est du bois de bouleau.

**8.** Particule de remplissage selon l'une quelconque des revendications 1 à 7, dans laquelle la particule est imprégnée d'une huile ou d'un conservateur ; plus préférentiellement dans laquelle l'huile est une huile naturelle, et le conservateur est un conservateur naturel ; plus préférentiellement dans laquelle l'huile est de l'huile de lin.

**9.** Pluralité de particules de remplissage, dans laquelle chaque particule de remplissage est une particule de remplissage telle que définie dans l'une quelconque des revendications précédentes, et dans laquelle la pluralité de particules comprennent deux formes de particules de remplissage, ou plus, et/ou comprennent deux tailles de particules de remplissage, ou plus.

**10.** Pluralité de particules de remplissage selon la revendication 9,

dans lesquelles les deux formes, ou plus, sont choisies dans le groupe consistant en un cube, un cuboïde, une sphère, un ellipsoïde, un sphéroïde, un ovoïde ou une pyramide ; et/ou
dans lesquelles la pluralité de particules de remplissage comprennent un premier type de particule de remplissage et un second type de particule de remplissage, dans lesquelles ledit premier type de particule de remplissage présente un volume au moins 2 ou 3 fois supérieur à celui du second type de particule de remplissage.

**11.** Procédé de production de la particule de remplissage selon l'une quelconque des revendications 1 à 8, le procédé comprenant :

le trempage dans une solution saline d'une particule comprenant un substrat qui comprend un matériau cellulosique et/ou hémicellulosique, dans lequel la particule ne contient pas de matériau thermoplastique et présente un volume allant jusqu'à environ 512 mm$^3$; éventuellement
le séchage de la particule trempée ; et éventuellement
le polissage de la particule.

**12.** Procédé selon la revendication 11, dans lequel la solution saline a été chauffée à au moins 50 °C, de préférence à environ 75 °C ; et/ou
dans lequel la particule reste dans la solution saline pendant au moins 10 minutes.

**13.** Système de gazon artificiel, comprenant :

un tapis de gazon artificiel, le tapis de gazon artificiel comprenant des fibres de gazon artificiel ;
une pluralité de particules de remplissage selon l'une quelconque des revendications 1 à 10 ; et éventuellement du sable.

14. Procédé selon la revendication 11 ou la revendication 12 comprenant une étape d'obtention de la particule avant l'étape de trempage, l'étape comprenant la découpe du matériau cellulosique et/ou hémicellulosique pour former des particules présentant un volume par particule allant jusqu'à environ 512 mm$^3$ qui sont de forme cuboïde, de préférence des cubes, puis le ponçage des particules coupées afin d'arrondir les coins de celles-ci.

15. Utilisation de la particule de remplissage selon l'une quelconque des revendications 1 à 8 ou de la pluralité de particules de remplissage selon la revendication 9 ou la revendication 10 comme remplissage pour gazon artificiel.

# Fig. 1

**Infill Grading**

**Fig. 2**

**A**

**B**

**C**

## Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT MI20131235 A1
- KR 20170105233 A1
- WO 2018039554 A1
- WO 2020120799 A1